# EUROPEAN PATENT APPLICATION

(11) **EP 2 073 440 A1**
(43) Date of publication of application: **24.06.2009**
(21) Application number: 07291583.8
(22) Date of filing: 21.12.2007
(51) Int. Cl.: H04L 12/24, H04L 29/06

(54) **Method, command converter and automatic configuration server for remote management of embedded devices**

(71) Applicant: Alcatel Lucent, 75008 Paris (FR)
(72) Inventor: Bouchat, Christèle, 2060 Antwerpen (BE); Acke, Willem Jozef Amaat, 2820 Rijmenam (BE)
(74) Representative: D'Halleweyn, Nele Veerle Trees Gertrudis

(57) **Abstract**

The present invention relates to a method to remotely manage an embedded device by a management server. It further relates to a command converter and automatic configuration server for use in this method. According to the invention, a method is provided to remotely manage an embedded device by a management server, in which said embedded device supports a communication protocol and wherein said management server supports a management protocol, characterized by the conversion of a command of said management protocol, which is directed to said embedded device, into a command of said communication protocol.

## Description

The present invention relates to a method to remotely manage an embedded device by a management server. It further relates to a command converter and automatic configuration server for use in this method.

The electronics industry is constantly striving to offer more functionality to the end-user. Most devices nowadays contain programmable circuitry. This is especially true for embedded devices which comprise a simplified computer system dedicated to perform a limited amount of tasks or services. Examples of embedded devices are MP3 players, mobile phones, home gateways etc. However, as the electronics industry evolves, the application area expands into areas like domestic appliances.

Some of these embedded devices offer the possibility for remote management. In this way, problems with the device can be solved remotely, or the device can be provided with new software or updates. To enable remote management, an embedded device must be provided with communication means and must support a management protocol. This protocol describes the format of the communication between the management server, which can be the computer system of the provider, and the embedded device.

A drawback of this method is that the management server and the embedded device must both support the same management protocol, which, due to the vast amount of available protocols, is troublesome.

A recent trend is to provide embedded devices with an interface for webservices or Universal Plug and Play (UPnP). Compared to typical management protocols, e.g. TR-069 or OMA-DM, the implementation of these protocols, which within the scope of the present invention are referred to as communication protocols, is less expensive due to the reduced memory and processing power requirements. Consequently, this trend is most visible for cheap end-user devices as well as for devices in which electronics is typically not regarded as the core component, e.g. whitegoods.

However, in most networks, e.g. the home network, the abovementioned communication protocols are not widely supported. Consequently, the device cannot be remotely managed because the management server does not support the corresponding service or protocol.

It is an object of the present invention to enable remote management of an embedded device by a management server, in which the embedded device supports a communication protocol and wherein the management server supports a management protocol.

This object is achieved by a method according to the present invention that is characterized by the conversion of a command of the management protocol, which is directed to the embedded device, into a command of the communication protocol. In this way, management commands directed to the embedded device can be interpreted by this device. Although focused on the downlink communication from management server to embedded device, the conversion can be bi-directional.

The abovementioned conversion can be carried out throughout the communication chain between embedded device and management server. In addition, a dedicated host can be incorporated in the network that performs the conversion. Such a host could perform the conversion for every device in the network, if needed.

To reduce the requirements for the embedded device, it is advantageous if the conversion is performed outside of the embedded device.

It is further or also possible if the conversion is performed within the management server. This conversion could co-exist next to the regular management protocol, i.e. the management server could remotely manage devices using its management protocol(s) or, via conversion, using the communication protocol of the embedded device.

The management protocol can be but is not limited to OMA-DM, TR-069, SNMP, CMIP, CIM or Telnet/SSH, whereas within the context of the present invention, possible communication protocols can be but are not limited to webservices or UPnP. The skilled person in the art should appreciate that various combinations of protocols are possible without deviating from the scope of the present invention.

The present invention further provides a command converter for use in the abovementioned method, not excluding variants thereof as previously described. The command converter is characterized in that it is arranged to convert a command of a management protocol into a command of a communication protocol. Such a command converter could correspond to the dedicated host mentioned above. It could however also be a module that is added to already existing hardware, such as the management server or the embedded device, or it could be an integral part of such devices.

The present invention further provides an automatic configuration server for remote management of an embedded device. It is characterized in that it comprises means to convert a command of a management protocol, which is directed to the embedded device, into a command of a communication protocol. Although an automatic configuration server is usually placed at the provider, it should be appreciated by the skilled person in the art, that a similar device could be part of the home network, or other networks, without deviating from the scope of the invention.

In the following, the present invention will be described in more detail under reference to the accompanying drawings in which:
Figure 1 shows part of a home network in which the present invention is applied; and
Figure 2 illustrates an automatic configuration server according to the present invention.

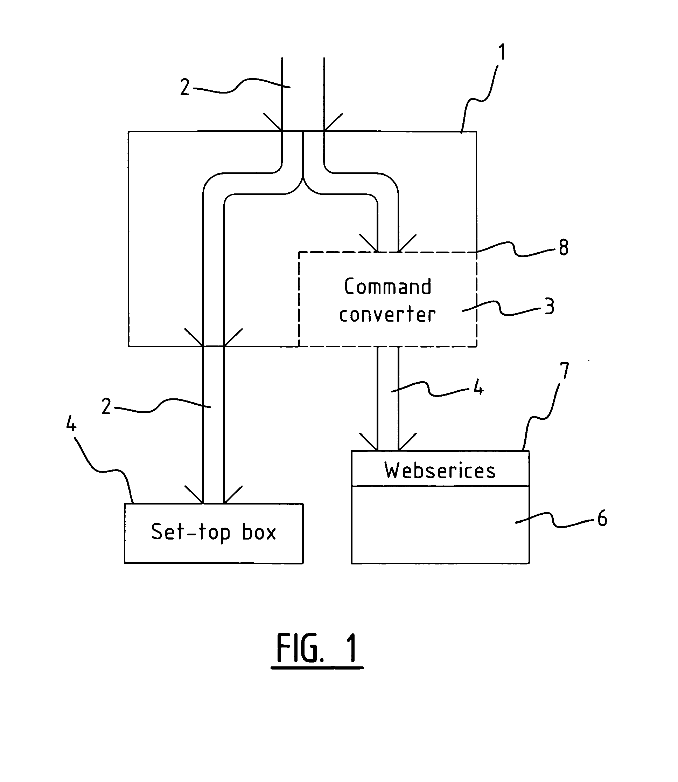

In figure 1, a home network is connected to the Internet, or another computer network, by means of a home gateway 1. Remote management of the home network is possible through the TR-069 protocol 2. The gateway comprises a command converter 3, responsible for the conversion between the TR-069 protocol 2 and the webservices communication protocol 4. A set-top box 5, which is connected to the gateway 1, is remotely manageable through the TR-069 protocol. An end-user embedded device 6 comprises an interface 7 for webservices. This device is remotely manageable through webservices via command converter 3. This command converter 3 can be an integral part of the gateway 1 or it can be a separate device in the home network, as indicated by the dotted line 8.

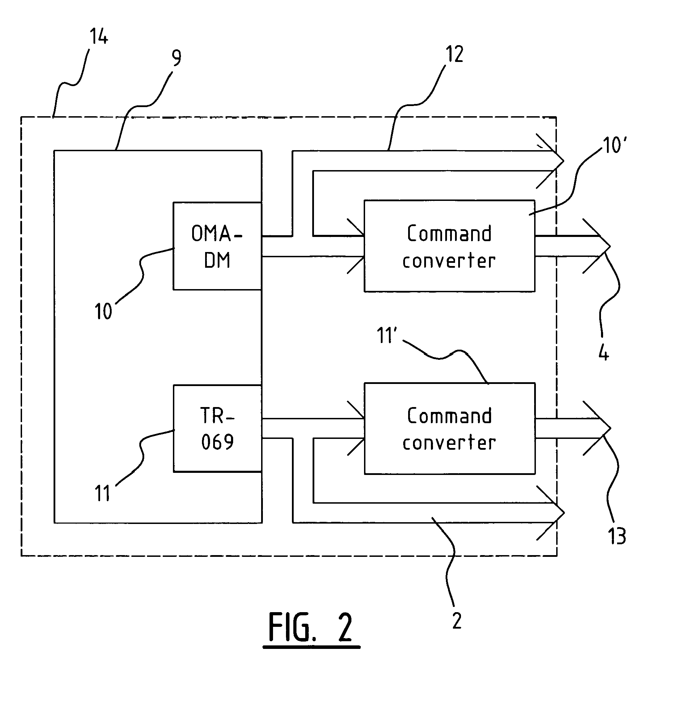

The automatic configuration server 9 in figure 2 has two interfaces 10, 11 to support the OMA-DM 12 and TR-069 2 management protocol. These interfaces are connected to corresponding command converters 10', 11'. These converters enable remote management through webservices 4 and UPnP 13, respectively. The command converters can be an integral part of the automatic configuration server, both or separately, as indicated by the dotted line.

The present invention has been described in detail referring to specific embodiments thereof. However, the skilled person in the art may recognize that modifications, additions, or adjustments can be made without deviating from the scope of the present invention as defined by the following claims.

## Claims

1. A method to remotely manage an embedded device by a management server, in which said embedded device supports a communication protocol and wherein said management server supports a management protocol, **characterized by** the conversion of a command of said management protocol, which is directed to said embedded device, into a command of said communication protocol.

2. The method according to claim 1, **characterized in that** said conversion is performed outside of said embedded device.

3. The method according to claim 1, **characterized in that** said conversion is performed within said management server.

4. The method according to claim 1, **characterized in that** said management protocol is OMA-DM, TR-069, SNMP, CMIP, CIM or Telnet/SSH.

5. The method according to claim 1, **characterized in that** said communication protocol is a webservice.

6. The method according to claim 1, **characterized in that** said communication protocol is UPnP.

7. A command converter for use in the method according to claim 1, **characterized in that** said command converter is arranged to convert a command of a management protocol into a command of a communication protocol.

8. An automatic configuration server for remote management of an embedded device as described in claim 1,
**characterized in that** said automatic configuration server comprises means to convert a command of a management protocol, which is directed to said embedded device, into a command of a communication protocol.
